# EUROPEAN PATENT APPLICATION

(11) **EP 4 753 242 A1**
(43) Date of publication of application: **03.06.2026**
(21) Application number: 23946239.3
(22) Date of filing: 26.07.2023
(51) Int. Cl.: H04L 69/24

(54) **BLOCK ACKNOWLEDGEMENT FEEDBACK MECHANISM NEGOTIATION METHOD, COMMUNICATION DEVICE, AND COMMUNICATION SYSTEM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/109443
(87) International publication number: WO 2025/020152

(57) **Abstract**

A block acknowledgement (BA) feedback mechanism negotiation method, a communication device, and a communication system. The method is applied to an initiating end for establishing a BA feedback mechanism, and comprises: determining a first wireless frame; wherein the first wireless frame comprises first identification information, the first identification information identifies timeout information of a BA frame, and the timeout information identifies timeout information on the application of a BA feedback mechanism between a plurality of physical access point devices (APs) or a multi-link access point devices (AP MLDs); and sending the first wireless frame. Therefore, the BA feedback mechanism can be applied between a plurality of physical APs or AP MLDs, so that the spectrum utilization rate and the data transmission efficiency are improved, and the BA feedback mechanism can adapt to the UHR demand.

## Description

### TECHNICAL FIELD

The present disclosure relates to the field of communication technology, in particular, to a method for negotiating a Block Acknowledgment (BA) feedback mechanism, a communication device, and a communication system.

### BACKGROUND

The current research on Wi-Fi technology focuses on areas such as Ultra High Reliability (UHR), with the vision of improving reliability of the Wireless Local Area Network (WLAN) connectivity, reducing latency, improving manageability, increasing throughput at different Signal to Noise Ratio (SNR) levels, and reducing device level power consumption.

In order to further improve data transmission efficiency, a BA feedback mechanism has been proposed. In the BA feedback mechanism, the receiver feeds back a BA after transmitting multiple data frames consecutively to indicate the reception of the transmitted data frames. The signaling associated with the BA feedback mechanism needs to be enhanced, so that the BA feedback mechanism can be adapted to UHR requirements.

### SUMMARY

Embodiments of the present disclosure provide a method for negotiating a Block Acknowledgment (BA) feedback mechanism, a communication device, and a communication system, to enable the BA feedback mechanism to be adapted to UHR requirements.

In a first aspect, embodiments of the present disclosure provide a method for negotiating a BA feedback mechanism, performed by an initiator for establishing the BA feedback mechanism. The method includes: determining a first frame, wherein the first frame includes first identification information, the first identification information indicates timeout information of a BA frame, and the timeout information indicates timeout information for the BA feedback mechanism to be applied across multiple physical Access Points (APs) / Access Point Multi-Link Devices (AP MLDs); and sending the first frame.

In a second aspect, embodiments of the present disclosure also provide a method for negotiating a BA feedback mechanism, performed by a responder for establishing the BA feedback mechanism. The method includes: receiving a first frame, wherein the first frame includes first identification information, the first identification information indicates timeout information of a BA frame, and the timeout information indicates timeout information for the BA feedback mechanism to be applied across multiple physical APs / AP MLDs.

In a third aspect, embodiments of the present disclosure also provide a communication device, which is an initiator for establishing a BA feedback mechanism, including: a determination module configured to determine a first frame, wherein the first frame includes first identification information, the first identification information indicates timeout information of a BA frame, and the timeout information indicates timeout information for the BA feedback mechanism to be applied across multiple physical APs / AP MLDs; and a sending module configured to send the first frame.

In a fourth aspect, embodiments of the present disclosure also provide a communication device, which is a responder for establishing a BA feedback mechanism, including: a receiving module configured to receive a first frame, wherein the first frame includes first identification information, the first identification information indicates timeout information of a BA frame, and the timeout information indicates timeout information for the BA feedback mechanism to be applied across multiple physical APs / AP MLDs.

In a fifth aspect, embodiments of the present disclosure also provide a communication device, which is an initiator for establishing a BA feedback mechanism, including: one or more processors, wherein the communication device is configured to perform the method for negotiating the BA feedback mechanism in the first aspect of the present disclosure.

In a sixth aspect, embodiments of the present disclosure also provide a communication device, which is a responder for establishing a BA feedback mechanism, including: one or more processors, wherein the communication device is configured to perform the method for negotiating the BA feedback mechanism in the second aspect of the present disclosure.

In a seventh aspect, embodiments of the present disclosure also provide a communication system, including a first communication device and a second communication device, wherein the first communication device is an initiator for establishing a BA feedback mechanism and is configured to execute the optional implementations as described in the first aspect, and the second communication device is a responder for establishing a BA feedback mechanism and is configured to execute the optional implementations as described in the second aspect.

In an eighth aspect, embodiments of the present disclosure also provide a storage medium storing instructions that, when executed on a communication device, cause the communication device to execute the optional implementations as described in the first, second, third, and fourth aspects.

In embodiments of the present disclosure, by defining the timeout information of the BA frame as the timeout information for the BA feedback mechanism to be applied across multiple physical APs / AP MLDs, the BA feedback mechanism can be applied across multiple physical Aps /AP MLDs, without needing to define for each AP the timeout information of the BA frame corresponding to the AP, thereby improving the spectrum utilization factor and the data transmission efficiency, and enabling the BA feedback mechanism to adapt to UHR requirements.

Additional aspects and advantages of embodiments of the present disclosure will be set forth in part in the description which follows, and will be obvious from the description or may be learned by practice of the present disclosure.

### BRIEF DESCRIPTION OF THE DRAWINGS

In order to more clearly explain the technical solutions in embodiments of the present disclosure, the drawings required for describing the embodiments are introduced below. These drawings are merely some embodiments of the present disclosure and do not impose specific limitations on the protection scope of the present disclosure.
FIG. 1 is a schematic diagram of an exemplary architecture of a communication system according to embodiments of the present disclosure;
FIG. 2 is a schematic diagram illustrating exemplary interaction for a method for negotiating a BA feedback mechanism according to embodiments of the present disclosure;
FIG. 3 is a first schematic flowchart of a method for negotiating a BA feedback mechanism according to embodiments of the present disclosure;
FIG. 4 is a second schematic flowchart of a method for negotiating a BA feedback mechanism according to embodiments of the present disclosure;
FIG. 5 is a first schematic diagram of a structure of a communication device according to embodiments of the present disclosure;
FIG. 6 is a second schematic diagram of a structure of a communication device according to embodiments of the present disclosure;
FIG. 7 is a schematic diagram of a structure of a terminal according to embodiments of the present disclosure; and
FIG. 8 is a schematic diagram of a structure of a chip according to embodiments of the present disclosure.

### DETAILED DESCRIPTION

Embodiments of the present disclosure provide a method, a device, and a system for negotiating a BA feedback mechanism.

In a first aspect, embodiments of the present disclosure provide a method for negotiating a BA feedback mechanism. The method is performed by an initiator for establishing a BA feedback mechanism, and the method includes:
determining a first frame, wherein the first frame includes first identification information, the first identification information indicates timeout information of a Block Acknowledgment (Block ACK, BA, where ACK stands for Acknowledgment) frame, and the timeout information indicates timeout information for a BA feedback mechanism to be applied across multiple physical Access Points (APs); and
sending the first frame.

In the above embodiments, by defining the timeout information of the BA frame as the timeout information for the BA feedback mechanism to be applied across multiple physical APs / AP MLDs, the BA feedback mechanism can be applied across multiple physical Aps /AP MLDs, without needing to define for each AP the timeout information of the BA frame corresponding to the AP, thereby improving the spectrum utilization factor and the data transmission efficiency, and enabling the BA feedback mechanism to adapt to UHR requirements.

In some embodiments according to the first aspect, the first identification information can be included in a Block ACK timeout field of the first frame.

In the above embodiments, by defining the timeout information for the BA feedback mechanism to be applied across multiple physical APs / AP MLDs in the Block ACK timeout field of the first frame, the timeout information for the BA feedback mechanism to be applied across multiple physical APs / AP MLDs can be defined without adding new fields to the first frame, thereby improving the utilization factor of each field in the first frame.

In some embodiments according to the first aspect, the first frame can further include second identification information, and the second identification information includes a time synchronization parameter between a first AP and a second AP after a station (STA) switches from the first AP to the second AP.

In the above embodiments, by defining the time synchronization parameter between the first AP and the second AP in the first frame, the communication time for the STA communicates with the second AP can be determined based on the time synchronization parameter and the above timeout information after the STA switches from the first AP to the second AP, thereby improving the data transmission efficiency.

In some embodiments according to the first aspect, the initiator for establishing the BA feedback mechanism is an STA or a non-AP MLD to which the STA affiliates, and the second identification information includes first time synchronization function (TSF) parameter information of the first AP or the first AP MLD to which the first AP affiliates; the initiator for establishing the BA feedback mechanism is the first AP or the first AP MLD to which the first AP affiliates, and the second identification information includes the first TSF parameter information, or an offset between the first TSF parameter information and second TSF parameter information, wherein the second TSF parameter information is TSF parameter information of a second AP or a second AP MLD to which the second AP affiliates.

In the above embodiments, by defining the time synchronization parameter between the first AP and the second AP according to different initiators for establishing the BA feedback mechanism, the time synchronization parameter can be adaptively indicated between the first AP and the second AP. This ensures that after the STA switches from the first AP to the second AP, the time consistency can be maintained, avoiding time deviations in the connection clock before and after the switching, which could affect the data transmission process. As a result, the data transmission efficiency can be improved.

In some embodiments according to the first aspect, the method can further include:
determining a second frame, the second frame includes third identification information, and the third identification information includes a starting sequence number (SSN) of a data frame sent, after the BA feedback mechanism is established, from the initiator for establishing the BA feedback mechanism to a responder for establishing the BA feedback mechanism; and
sending the second frame.

In the above embodiments, by defining the starting sequence number of the data frame sent from the initiator for establishing the BA feedback mechanism to the responder for establishing the BA feedback mechanism, a reference point can be provided for subsequently determining the data frames transmitted between the initiator and the responder.

In some embodiments according to the first aspect, the method can further include:
determining a third frame, wherein the third frame includes fourth identification information, and the fourth identification information indicates whether the BA feedback mechanism is applied across the multiple physical APs / AP MLDs; and
sending the third frame.

In the above embodiments, the fourth identification information in the third frame is used to indicate whether the BA feedback mechanism is applied across the multiple physical APs / AP MLDs, which facilitates determining, directly based on the fourth identification information in the third frame, whether the BA feedback mechanism will be applied across the multiple physical APs / AP MLDs involved in the current data transmission process.

In some embodiments according to the first aspect, the fourth identification information includes a first identification field configured to indicate whether the BA feedback mechanism is applied across the multiple physical APs / AP MLDs, or a second identification field configured to indicate whether the parameter information for establishing an initial association between the STA and the first AP includes the identification information of the second AP or the second AP MLD to which the second AP affiliates.

In the above embodiments, whether the BA feedback mechanism is applied across the multiple physical APs / AP MLDs can be indicated either explicitly (i.e., by using the first identification field to indicate whether the BA feedback mechanism is applied across multiple physical APs / AP MLDs) or implicitly (i.e., by using the second identification field to indicate whether the parameter information for establishing the initial association between the STA and the first AP includes the identification information of the second AP or the second AP MLD to which the second AP affiliates).

In some embodiments according to the first aspect, the first identification field is included in an Ultra High Reliability (UHR) capability information element of the third frame.

In the above embodiments, by including the first identification field in the UHR capability information element of the third frame to indicate whether the BA feedback mechanism is applied across multiple physical APs / AP MLDs, whether the BA feedback mechanism is applied across multiple physical APs / AP MLDs can be defined without adding new fields to the third frame, thereby improving the utilization factor of each field in the third frame.

In some embodiments according to the first aspect, the first frame is an Add Block Acknowledgment request (Add BA request) frame, and the second frame is a Block Acknowledgment request (BA request) frame; wherein the initiator is the STA or the non-AP MLD described above, and the third frame includes one or more of the following: a Probe Request frame, an Association Request frame, or a Reassociation Request frame; wherein the initiator is the first AP or the first AP MLD described above, and the third frame includes one or more of the following: a Beacon frame, a Probe Response frame, an Association Request frame, or a Reassociation Request frame.

In the above embodiments, when the initiator is the STA or the non-AP MLD, the third frame is provided to include one or more of the following: a Probe Request frame, an Association Request frame, or a Reassociation Request frame; when the initiator is the first AP or the first AP MLD, the third frame is provided to include one or more of the following: a Beacon frame, a Probe Response frame, an Association Request frame, or a Reassociation Request frame. By including the fourth identification information indicating whether the BA feedback mechanism is applied across the multiple physical APs / AP MLDs in the third frame, indicating whether the BA feedback mechanism is applied across the multiple physical APs / AP MLDs can be achieved during the initial association establishment process between the initiator and the responder for establishing the BA feedback mechanism.

By indicating using the first identification information of the Add BA request frame the timeout information for the BA feedback mechanism to be applied across multiple physical APs / AP MLDs, the timeout information for the BA feedback mechanism to be applied across multiple physical APs / AP MLDs can be defined during the Block Acknowledgment mechanism establishment process.

By indicating using the third identification information of the BA request frame the starting sequence number of the data frame sent after the BA feedback mechanism is established from the initiator for establishing the BA feedback mechanism to the responder for establishing the BA feedback mechanism, the starting frame of the data stream in the data transmission between the STA and the first AP can be determined based on the starting sequence number after the STA switches from the first AP to the second AP, so as to merge the data stream in the data transmission between the STA and the first AP and the data stream in the data transmission between the STA and the second AP, into a complete data stream, ensuring uninterrupted data transmission during STA roaming and achieving seamless communication when switching from the first AP to the second AP.

In a second aspect, embodiments of the present disclosure provide a method for negotiating a BA feedback mechanism. The method is performed by a responder for establishing a BA feedback mechanism, and the method includes:
receiving a first frame, wherein the first frame includes first identification information, the first identification information indicates timeout information of a BA frame, and the timeout information indicates timeout information for a BA feedback mechanism to be applied across multiple physical APs / AP MLDs.

In some embodiments according to the second aspect, the first identification information is included in a Block ACK timeout field of the first frame.

In some embodiments according to the second aspect, the first frame further includes second identification information, and the second identification information includes a time synchronization parameter between a first AP and a second AP after a station (STA) switches from the first AP to the second AP.

In some embodiments according to the second aspect, the initiator for establishing the BA feedback mechanism is an STA or a non-AP MLD to which the STA affiliates, and the second identification information includes first time synchronization function (TSF) parameter information of the first AP or the first AP MLD to which the first AP affiliates; the initiator for establishing the BA feedback mechanism is the first AP or the first AP MLD, and the second identification information includes the first TSF parameter information, or an offset between the first TSF parameter information and second TSF parameter information, wherein the second TSF parameter information is TSF parameter information of a second AP or a second AP MLD to which the second AP affiliates.

In some embodiments according to the second aspect, the method further includes:
receiving a second frame, the second frame includes third identification information, and the third identification information includes a starting sequence number of a data frame sent from the initiator to the responder after the BA feedback mechanism is established.

In some embodiments according to the second aspect, the method further includes:
receiving a third frame, wherein the third frame includes fourth identification information, and the fourth identification information indicates whether the BA feedback mechanism is applied across the multiple physical APs / AP MLDs.

In some embodiments according to the second aspect, the fourth identification information includes a first identification field configured to indicate whether the BA feedback mechanism is applied across the multiple physical APs / AP MLDs, or a second identification field configured to indicate whether the parameter information for establishing an initial association between the STA and the first AP includes the identification information of the second AP or the second AP MLD.

In some embodiments according to the second aspect, the first identification field is included in an Ultra High Reliability (UHR) capability information element of the third frame.

In some embodiments according to the second aspect, the first frame is an Add BA request frame, and the second frame is a Block Acknowledgment request (BA request) frame; wherein the initiator is the STA or the non-AP MLD, and the third frame includes one or more of the following: a Probe Request frame, an Association Request frame, or a Reassociation Request frame; wherein the initiator is the first AP or the first AP MLD, and the third frame includes one or more of the following: a Beacon frame, a Probe Response frame, an Association Request frame, or a Reassociation Request frame.

In a third aspect, embodiments of the present disclosure provide a communication device, which is an initiator for establishing a BA feedback mechanism. The communication device includes at least one of a determination module or a sending module. The communication device is configured to implement the optional embodiments of the first aspect.

In a fourth aspect, embodiments of the present disclosure also provide a communication device, which is a responder for establishing a BA feedback mechanism. The communication device includes at least one receiving module. The communication device is configured to implement the optional embodiments of the second aspect.

In a fifth aspect, embodiments of the present disclosure also provide a communication device including one or more processors, and the communication device is configured to implement the optional embodiments of the first aspect.

In a sixth aspect, embodiments of the present disclosure also provide a communication device including one or more processors, and the communication device is configured to implement the optional embodiments of the second aspect.

In a seventh aspect, embodiments of the present disclosure also provide a communication system including a first communication device and a second communication device. The first communication device is an initiator for establishing the BA feedback mechanism and is configured to implement the optional embodiments of the first aspect, and the second communication device is a responder for establishing the BA feedback mechanism and is configured to implement the optional embodiments of the second aspect.

In an eighth aspect, embodiments of the present disclosure also provide a storage medium having instructions stored thereon. When the instructions are executed on a communication device, the communication device is caused to implement the optional embodiments as described in the first, second, third, and fourth aspects.

In a ninth aspect, embodiments of the present disclosure provide a program product. When the program product is executed by a communication device, the communication device is caused to perform the methods in the optional embodiments as described in the first, second, third, and fourth aspects.

In a tenth aspect, embodiments of the present disclosure provide a computer program. When the computer program is executed on a computer, the computer is caused to perform the methods in the optional embodiments as described in the first, second, third, and fourth aspects.

In an eleventh aspect, embodiments of the present disclosure provide a chip or a chip system. The chip or the chip system includes a processing circuit configured to perform the methods in the optional embodiments as described in the first, second, third, and fourth aspects.

It should be understood that the initiator, the responder, the communication system, the storage medium, the program product, the computer program, the chip, or the chip system mentioned above are all used to perform the methods for negotiating a BA feedback mechanism provided in embodiments of the present disclosure. Therefore, the beneficial effects that can be achieved can be referred to the beneficial effects in the corresponding methods, and will not be repeated here.

Embodiments of the present disclosure provide a method for negotiating a BA feedback mechanism, a communication device, and a communication system. In some embodiments, the terms "the method for negotiating the BA feedback mechanism" can be interchangeable with "the signal transmission method" and "the wireless frame transmission method", and terms such as "information processing system" and "communication system" are interchangeable.

The embodiments of the present disclosure are not exhaustive, but merely illustrative of some embodiments, and are not intended to limit specifically the protection scope of the present disclosure. Where there is no contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily interchanged. In addition, the optional implementations in a certain embodiment can be arbitrarily combined. In addition, the embodiments can be arbitrarily combined. For example, some or all steps of different embodiments can be arbitrarily combined, and a certain embodiment can be arbitrarily combined with the optional implementations of other embodiments.

In all embodiments of the present disclosure, unless otherwise specified or logically conflicting, the terminology and/or descriptions are consistent across embodiments and can be referenced interchangeably. Technical features from different embodiments can be combined to form new embodiments based on their inherent logical relationships.

The terminology used in these embodiments is for the purpose of describing specific embodiments only and is not intended to limit the present disclosure.

In embodiments of the present disclosure, "multiple" refers to two or more.

In some embodiments, terms such as "at least one of", "at least one item of", "at least one", "one or more", "a plurality of", and "multiple" can be used interchangeably.

In some embodiments, expressions such as "at least one of A and B", "A and/or B", "in the case of A, and in another case of B", and "in response to a case A, and in response to another case B" can, depending on the context, include the following technical solutions: in some embodiments, A (executed regardless of B); in some embodiments, B (executed regardless of A); in some embodiments, execution is performed selectively from A and B (A and B are selectively executed); and in some embodiments, both A and B are executed. The same applies when there are more branches such as A, B, and C.

In some embodiments, the expression "A or B" can, depending on the context, include the following technical solutions: in some embodiments, A (executed regardless of B); in some embodiments, B (executed regardless of A); in some embodiments, execution is performed selectively from A and B (A and B are selectively executed). The same applies when there are more branches such as A, B, and C.

The prefixes such as "first" and "second" in the embodiments of the present disclosure are only for distinguishing different descriptive objects and do not constitute restrictions on the positions, orders, priority, quantity, or contents of the descriptive objects. For the statements of the descriptive objects, please refer to the claims or the description in the context of the embodiments. The use of prefixes should not constitute unnecessary restrictions. For example, if the descriptive object is a "field", then the ordinal numbers before "field" in the "first field" and the "second field" do not restrict the position or the order between the "fields", and the "first" and the "second" do not restrict whether the "fields" they modify are in the same message, nor do they restrict the order of the "first field" and the "second field." For another example, if the descriptive object is a "level", then the ordinal numbers before "level" in the "first level" and the "second level" do not restrict the priority between "levels". In addition, the number of objects described is not limited by the ordinal number, it can be one or more. For example, in the "first device", the number of "devices" can be one or more. In addition, objects modified by different prefixes can be the same or different. For example, if the object is described as "device", then the "first device" and the "second device" can be the same device or different devices, and their types can be the same or different. Similarly, if the object is described as "information", then the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiments, terms such as "in response to...", "in response to determining... ", "in the case of...", "when... ", "if...", etc., can be interchanged.

In some embodiments, terms such as "greater than", "greater than or equal to", "not smaller than", "more than", "more than or equal to", "not less than", "higher than", "higher than or equal to", "not lower than", and "above" are interchangeable. Terms such as "smaller than", "smaller than or equal to", "not greater than", "less than", "less than or equal to", "not more than", "lower than", "lower than or equal to", "not higher than", and "below" are interchangeable.

In some embodiments, "device" can be interpreted as physical or virtual, and its name is not limited to the names described in the embodiments. Terms such as "apparatus", "equipment", "device", "circuit", "network element", "node", "function", "unit", "section", "system", "network", "chip", "chip system", "entity", and "body" are interchangeable.

In some embodiments, the "network" can be interpreted as devices included in the network, for example, an access network device, a core network device, etc.

In some embodiments, the obtaining of data, information, etc., can comply with the laws and regulations of the country where the location is situated.

In some embodiments, data, information, etc., can be acquired after obtaining user's consent.

In addition, each element, each row, or each column in the tables of the present disclosure can be implemented as an independent embodiment, and any combination of any element, any row, or any column can also be implemented as an independent embodiment.

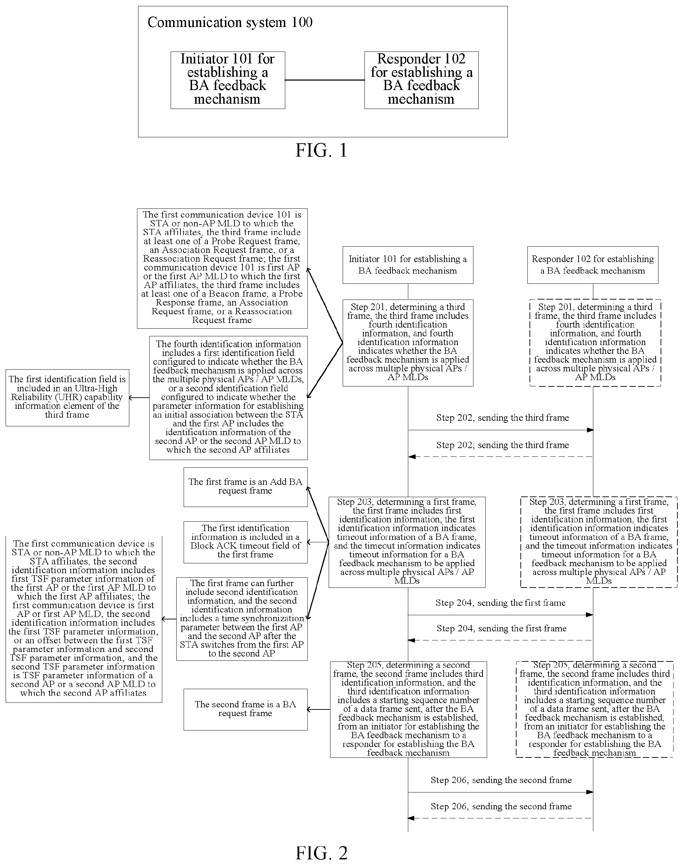

FIG. 1 is a schematic diagram of an architecture of a communication system according to embodiments of the present disclosure.

As shown in FIG. 1, the communication system 100 includes a first communication device 101 and a second communication device 102. The first communication device 101 is an initiator for establishing a BA feedback mechanism, and the second communication device 102 is a responder for establishing a BA feedback mechanism.

In some embodiments, the first communication device 101 can be an STA (station).

In some embodiments, the first communication device 101 includes, for example, a wireless communication chip, a wireless sensor, or a wireless communication terminal that supports Wi-Fi communication functionality. In some embodiments, the wireless communication terminal can be at least one of the following: a mobile phone, a wearable device, an IoT device or terminal, a car with communication capabilities, a smart car, a pad, a computer with wireless transceiver capabilities, a VR (virtual reality) terminal device, an AR (augmented reality) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home, but it is not limited to these.

In some embodiments, the first communication device 101 can be a terminal device or a network device with a Wireless Fidelity (Wi-Fi) chip. In some embodiments, the first communication device 101 can support multiple WLAN standards such as 802.11 ax, 802.11be, 802.11ac, 802.11n, 802.11g, 802.11b, and 802.11a, and can support the next generation 802.11 protocol, but is not limited to this.

In some embodiments, the second communication device 102 can be an Access Point (AP).

In some embodiments, the second communication device 102 can be an Access Point for a mobile terminal to access a wired network. The AP can serve as a bridge connecting the wired network and the wireless network, and a main function of the AP is to connect various wireless network clients together and then connect the wireless network to the Ethernet. In some embodiments, the AP can be a terminal device or a network device with a Wireless Fidelity chip. In some embodiments, the AP can support multiple WLAN standards such as 802.11ax, 802.11be, 802.11ac, 802.11n, 802.11g, 802.11b, and 802.11a, and can support the next generation 802.11 protocol, but is not limited to this.

In some embodiments, the AP and the STA can be devices supporting multi-link communication. For example, the AP and the STA can be respectively represented as an Access Point Multi-Link Device (AP MLD) and a Non-Access Point Multi-Link Device (non-AP MLD, also known as a multi-link station). The AP MLD can represent an Access Point supporting the multi-link communication, and the non-AP MLD can represent a station supporting the multi-link communication.

It should be noted that the first communication device 101 can also be an AP or an AP MLD to which the AP affiliates, and correspondingly, the second communication device 102 can be an STA or a non-AP MLD to which the STA affiliates. The present disclosure does not limit the specific implementations of the initiator and the responder for establishing the BA feedback mechanism. The initiator can be one of the STA and AP establishing the initial association, and the responder can be the other of the STA and AP establishing the initial association.

It should be understood that the communication system described in the present disclosure is for the purpose of more clearly illustrating the technical solutions of the present disclosure and does not constitute a limitation on the technical solutions proposed in the present disclosure. Those skilled in the art will recognize that with the evolution of system architectures and with the emergence of new business scenarios, the technical solutions proposed in the present disclosure are also applicable to similar technical problems.

The following embodiments of the present disclosure can be applied to the communication system 100 shown in FIG. 1, or to some of the entities, but are not limited to this. The entities shown in FIG. 1 are illustrative. The communication system can include all or some of the entities in FIG. 1, or can include other entities not shown in FIG. 1. The number and the form of each entity are arbitrary. Each entity can be physical or virtual. The connection relationship between the entities is illustrative. Entities may or may not be connected, and the connection can be arbitrary, such as direct or indirect connections, wired or wireless connections.

The embodiments of the present disclosure can be applied to the Wireless Local Area Network (WLAN), such as Local Area Networks based on the 802.11 series of protocols. In a WLAN, a Basic Service Set (BSS) is a fundamental component of the WLAN. An BSS network consists of stations with some association within a specific coverage area. One type of association is that stations communicate directly with each other in an Ad hoc network, which is called an Independent Basic Service Set (IBSS). Another more common scenario is that in the BSS network, there is only one central station dedicated to managing the BSS, called an Access Point (AP), while other stations in the BSS network that are not APs are called terminals, also known as non-AP STAs. The AP and the non-AP STAs are collectively referred to as STAs. When describing STAs, it is not necessary to distinguish between AP and non-AP STAs. Within the same BSS network, due to the distance, the transmission power, etc., a STA cannot detect other STAs that are far away, and they are hidden nodes for each other.

FIG. 2 is one of schematic diagrams illustrating interaction for a method for negotiating a BA feedback mechanism according to embodiments of the present disclosure. As shown in FIG. 2, the method includes following steps.

In step 201, a first communication device 101 determines a third frame, the third frame includes fourth identification information, and fourth identification information indicates whether the BA feedback mechanism is applied across multiple physical APs / AP MLDs.

In some embodiments, the first communication device 101 can be an STA, and the second communication device 102 can be a first AP. Alternatively, the first communication device 101 can also be a first AP, and correspondingly, the second communication device 102 can be a STA.

The multiple physical APs can include, but are not limited to, APs that have established an initial association with or are about to establish an initial association with the STA. For example, the multiple physical APs can include a first AP and a second AP. The first AP and the second AP can affiliate to the same AP MLD. For example, the first AP MLD to which the first AP affiliates can be the same as the second AP MLD to which the second AP affiliates. Alternatively, the first AP and the second AP can also affiliate to different AP MLDs. For example, the first AP MLD to which the first AP affiliates can be different from the second AP MLD to which the second AP affiliates.

In a case where the multiple physical APs all support the multi-link communication, the fourth identification information indicates whether the BA feedback mechanism is applied to each link of the multiple AP MLDs.

The first communication device 101 and the second communication device 102 can establish an initial association or are about to establish an initial association (i.e., no initial association is established). During the initial association establishment process, the first communication device 101 and the second communication device 102 can indicate whether the BA feedback mechanism is applied across the multiple physical APs / AP MLDs by using a management frame related to establishment of the initial association.

In some embodiments, the first communication device 101 is the STA or the non-AP MLD to which the STA affiliates, and the third frame includes one or more of the following: a Probe Request frame, an Association Request frame, or a Reassociation Request frame; the first communication device 101 is the first AP or the first AP MLD to which the first AP affiliates, and the third frame includes one or more of the following: a Beacon frame, a Probe Response frame, an Association Request frame, or a Reassociation Request frame.

In the above embodiments, when the initiator is the STA or the non-AP MLD, the third frame is provided to include one or more of the following: a Probe Request frame, an Association Request frame, or a Reassociation Request frame; when the initiator is the first AP or the first AP MLD, the third frame is provided to include one or more of the following: a Beacon frame, a Probe Response frame, an Association Request frame, or a Reassociation Request frame. By including the fourth identification information indicating whether the BA feedback mechanism is applied across the multiple physical APs / AP MLDs in the third frame, indicating whether the BA feedback mechanism is applied across the multiple physical APs / AP MLDs can be achieved during the initial association establishment process between the initiator and the responder for establishing the BA feedback mechanism.

In some embodiments, the fourth identification information includes a first identification field configured to indicate whether the BA feedback mechanism is applied across the multiple physical APs / AP MLDs, or a second identification field configured to indicate whether the parameter information for establishing an initial association between the STA and the first AP includes the identification information of the second AP or the second AP MLD to which the second AP affiliates.

In some embodiments, the first identification field is included in an Ultra High Reliability (UHR) capability information element of the third frame.

The first identification field can occupy one bit in the third frame. When the bit is set to 1, it indicates that the BA feedback mechanism is applied across multiple physical APs / AP MLDs. When the bit is set to 0, it indicates that the BA feedback mechanism is not applied across multiple physical APs / AP MLDs.

The identification information of the second AP or the second AP MLD to which the second AP affiliates can include MAC address information of the second AP or the second AP MLD to which the second AP affiliates over a target link, the target link being a transmission link between the STA and the second AP.

In the above embodiments, the first identification field is used to indicate whether the BA feedback mechanism is applied across multiple physical APs / AP MLDs, which means that whether the BA feedback mechanism is applied across multiple physical APs / AP MLDs can be indicated explicitly. By including the identification information of the second AP or the second AP MLD to which the second AP affiliates in the parameter information associated with the establishment of the initial association between the STA and the first AP, whether the BA feedback mechanism is applied across multiple physical APs / AP MLDs can be implicitly indicated after the initial association between the STA and the first AP is established.

In step 202, the first communication device 101 sends the third frame to the second communication device 102.

In the above embodiment, the first communication device 101 sends the determined third frame to the second communication device 102. The fourth identification information in the third frame indicates whether the BA feedback mechanism is applied across the multiple physical APs / AP MLDs. Therefore, the device receiving the third frame can determine, directly based on the fourth identification information in the third frame, whether the BA feedback mechanism is applied across the multiple physical APs / AP MLDs involved in the current data transmission process. This allows the same BA feedback mechanism to be used to send the feedback for the transmitted data frames across multiple physical APs / AP MLDs, improving the spectrum utilization and the data transmission efficiency, and enabling the BA feedback mechanism to adapt to UHR requirements.

In some embodiments, in steps 201 and 202, the third frame can also be determined by the second communication device 102 and sent to the first communication device 101.

After an initial association is established between the first communication device 101 and the second communication device 102, the data transmission can be performed through the link established between them. The data frame transmitted between the first communication device 101 and the second communication device 102 can be a Quality of Service (QoS) data frame.

In some embodiments, the first communication device 101 and the second communication device 102 can perform the data transmission within an R-TWT SP (R-TWT service period).

In step 203, the first communication device 101 determines a first frame, the first frame includes first identification information, the first identification information indicates timeout information of a BA frame, and the timeout information indicates timeout information for a BA feedback mechanism to be applied across multiple physical APs / AP MLDs.

In a case where the multiple physical APs all support the multi-link communication, the timeout information indicates that the BA feedback mechanism is applied to each link of the multiple AP MLDs.

In some embodiments, the first frame is an Add BA request frame.

In some embodiments, the first identification information can be included in a Block ACK timeout field of the first frame.

In some embodiments, the timeout information of the BA frame indicates the longest duration during which the initiator and the responder corresponding to the BA frame maintain a communication connection without data transmission.

In some embodiments, timing can be performed after the BA feedback mechanism is established to determine a duration during which the initiator and the responder corresponding to the BA frame maintain a communication connection without data transmission.

In some embodiments, if the determined duration is less than or equal to the longest duration indicated by the timeout information of the BA frame, the data transmission can be continued, if the determined duration is greater than the longest duration indicated by the timeout information of the BA frame, the data transmission needs to be re-performed. For example, data transmission can be performed after the BA mechanism is re-established.

In the above embodiments, by defining the timeout information of the BA frame as the timeout information for the BA feedback mechanism to be applied across multiple physical APs / AP MLDs, the BA feedback mechanism can be allowed to be applied across multiple physical APs / AP MLDs without needing to define for each AP timeout information of the BA frame corresponding to the AP, improving the spectrum utilization and the data transmission efficiency, enabling the BA feedback mechanism to adapt to UHR requirements.

In some embodiments, the first frame can further include second identification information, and the second identification information includes a time synchronization parameter between the first AP and the second AP after the STA switches from the first AP to the second AP.

Different APs may have a time deviation between connection clocks corresponding to their respective connections. After the STA switches from the first AP to the second AP, delays may occur, if the timing in the data frame transmission process still uses the time information for the first connection corresponding to the first AP when it is under the second connection corresponding to the second AP, which will affect the data frame transmission.

In some embodiments, the time synchronization parameter between the first AP and the second AP can be determined based on a time deviation between the connection clock corresponding to the first AP's first connection and the connection clock corresponding to the second AP's second connection.

In some embodiments, if the first communication device is the STA or the non-AP MLD to which the STA affiliates, the second identification information includes first TSF parameter information of the first AP or the first AP MLD to which the first AP affiliates; if the first communication device is the first AP or the first AP MLD, the second identification information includes the first TSF parameter information, or an offset between the first TSF parameter information and second TSF parameter information, wherein the second TSF parameter information is TSF parameter information of the second AP or the second AP MLD to which the second AP affiliates.

When the first communication device is the STA or the non-AP MLD to which the STA affiliates, the timing can be performed after the time synchronization is performed based on the first TSF parameter information.

It should be noted that if the first AP supports the multi-link communication, i.e., the first AP affiliates to the first AP MLD, then each link corresponding to the first AP MLD has TSF parameter information. The time synchronization needs to be performed based on the TSF parameter information corresponding to the link where the first AP is located.

If the second identification information is the offset between the first TSF parameter information and the second TSF parameter information, and if the first AP and the second AP both support the multi-link communication (i.e., the first AP affiliates to the first AP MLD, and the second AP affiliates to the second AP MLD), then the TSF offset exists between each AP of the first AP MLD and each AP of the second AP MLD. The time synchronization can be performed specifically based on the TSF offset between the first AP's link and the second AP's link.

When the first communication device is the first AP or the first AP MLD to which the first AP affiliates, the time synchronization can be performed based on the TSF parameter information of the second AP or the second AP MLD to which the second AP affiliates, and then the timing can be performed from the time when the BA mechanism is established. Alternatively, the time information corresponding to the second AP's second connection can be synchronized with the time information corresponding to the first AP's first connection, based on the offset between the first TSF parameter information and the second TSF parameter information, and then the timing is performed.

In the above embodiments, by defining the time synchronization parameter between the first AP and the second AP according to different initiators for establishing the BA feedback mechanism, the time synchronization parameter between the first AP and the second AP can be adaptively indicated. This ensures that after the STA switches from the first AP to the second AP, the time consistency can be maintained, avoiding time deviations in the connection clock before and after the switching, which could affect the data transmission process. As a result, the data transmission efficiency can be improved.

In step 204, the first communication device 101 sends the first frame to the second communication device 102.

In some embodiments, in steps 203 and 204, the first frame can also be determined by the second communication device 102 and sent to the first communication device 101.

In step 205, the first communication device 101 determines a second frame, the second frame includes third identification information, and the third identification information includes a starting sequence number of a data frame sent, after the BA feedback mechanism is established, from an initiator for establishing the BA feedback mechanism to a responder for establishing the BA feedback mechanism.

In some embodiments, the second frame is a BA request frame.

After the STA switches from the first AP to the second AP, a starting value of the sequence number (SN) for the BA feedback mechanism is set, by using the third identification information in the second frame, to the starting sequence number of the data frame sent by the initiator for establishing the BA feedback mechanism to the responder for establishing the BA feedback mechanism, rather than the SN value included in the QoS data frame received by the STA from the second AP, or the SN value of the QoS data frame sent by the STA to the second AP. As a result, during the process of the STA switching from the first AP to the second AP, the data frame corresponding to the starting sequence number of the data frame for the data transmission between the STA and the first AP can still be used as a reference point to determine the complete data flow, ensuring uninterrupted data transmission and achieving seamless communication during the switching.

In step 206, the first communication device 101 sends the second frame to the second communication device 102.

In some embodiments, in steps 205 and 206, the second frame can also be determined by the second communication device 102 and sent to the first communication device 101.

In some embodiments, the name of the information, etc., is not limited to those described in the embodiments. Terms such as "information", "message", "signal", "signaling", "report", "configuration", "indication", "instruction", "command", "channel", "parameter", "domain", "field", "symbol", "bit", "data", "program", and "chip" can be used interchangeably.

In some embodiments, terms such as "moment", "time point", "time", and "time location" can be used interchangeably. Terms such as "duration", "time period", "time window", "window", and "time" can be used interchangeably.

In some embodiments, terms such as "wireless access scheme" and "waveform" can be used interchangeably.

In some embodiments, terms such as "specific", "predetermined", "preset", "set", "indicated", "certain", "any", and "first" are interchangeable. The terms "specific A", "predetermined A", "preset A", "set A", "indicated A", "certain A", "any A", and "first A" can be interpreted as A pre-defined in a protocol, etc., or A obtained through setting, configuration, or indication, etc., or interpreted as specific A, certain A, any A, or first A, etc., but is not limited to this.

In some embodiments, determination or judgment can be performed using a value represented by one bit (0 or 1), or by a true/false value (Boolean value), or by numerical comparison (e.g., comparison with a predetermined value), but is not limited to this.

In some embodiments, "not expecting to receive" can be interpreted as not receiving over time-domain resources and/or frequency-domain resources, or interpreted as not performing subsequent processing on the received data, etc., and "not expecting to send" can be interpreted as not sending, or interpreted as sent but not expecting a response from the receiver.

The method for negotiating a BA feedback mechanism involved in the embodiments of the present disclosure can include at least one of the steps or embodiments described above. For example, step 201 can be implemented as an independent embodiment, step 203 can be implemented as an independent embodiment, and step 205 can be implemented as an independent embodiment. The combination of step 201 and step 202 can be implemented as an independent embodiment, the combination of step 203 and step 204 can be implemented as an independent embodiment, the combination of step 205 and step 206 can be implemented as an independent embodiment, the combination of step 201, step 202, step 203 and step 204 can be implemented as an independent embodiment, the combination of step 201, step 202, step 205 and step 206 can be implemented as an independent embodiment, and the combination of step 203, step 204, step 205 and step 206 can be implemented as an independent embodiment, but is not limited to this.

In some embodiments, reference can be made to other embodiments described before or after the specification corresponding to FIG. 2.

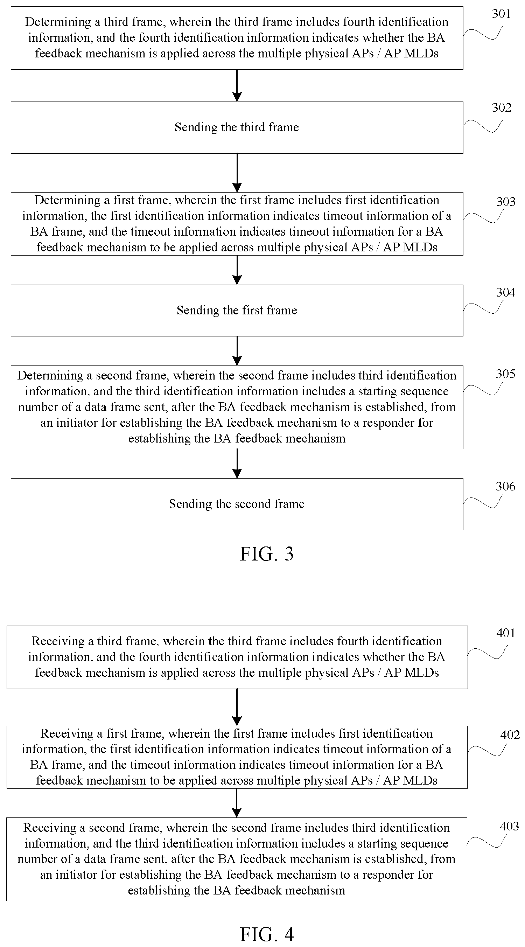

FIG. 3 is a first schematic flowchart of a method for negotiating a BA feedback mechanism according to embodiments of the present disclosure.

As shown in FIG. 3, the method can be performed by a first communication device 101, which is the initiator for establishing the BA feedback mechanism. The method includes following steps.

In step 301, determining, by the first communication device 101, a third frame, wherein the third frame includes fourth identification information, and the fourth identification information indicates whether the BA feedback mechanism is applied across the multiple physical APs / AP MLDs.

In some embodiments of the present disclosure, if the first communication device 101 is an STA or a non-AP MLD , the third frame includes one or more of the following: a Probe Request frame, an Association Request frame, or a Reassociation Request frame; if the first communication device 101 is a first AP or a first AP MLD to which the first AP affiliates, the third frame includes one or more of the following: a Beacon frame, a Probe Response frame, an Association Request frame, or a Reassociation Request frame.

In some embodiments of the present disclosure, the fourth identification information includes a first identification field configured to indicate whether the BA feedback mechanism is applied across the multiple physical APs / AP MLDs described above; or a second identification field configured to indicate whether the parameter information for establishing an initial association between the STA and the first AP described above includes the identification information of the second AP or the second AP MLD to which the second AP affiliates.

In some embodiments of the present disclosure, the first identification field is included in an Ultra High Reliability (UHR) capability information element of the third frame.

Optional implementations of step 301 can be found in the optional implementations of step 201 in FIG. 2 and other related parts in the embodiments involved in FIG. 2, which will not be repeated here.

In step 302, sending, by the first communication device 101, a third frame to the second communication device 102.

Optional implementations of step 302 can be found in the optional implementations of step 202 in FIG. 2 and other related parts in the embodiments involved in FIG. 2, which will not be repeated here.

In step 303, determining, by the first communication device 101, a first frame, wherein the first frame includes first identification information, the first identification information indicates timeout information of a BA frame, and the timeout information indicates timeout information for a BA feedback mechanism to be applied across multiple physical APs / AP MLDs.

In some embodiments, the first frame is an Add BA request frame.

In some embodiments, the first identification information can be included in a Block ACK timeout field of the first frame.

In some embodiments, the first frame can further include second identification information, and the second identification information includes a time synchronization parameter between the first AP and the second AP after the STA switches from the first AP to the second AP.

In some embodiments, if the first communication device is the STA or the non-AP MLD to which the STA affiliates, the second identification information includes first TSF parameter information of the first AP or the first AP MLD to which the first AP affiliates; if the first communication device is the first AP or the first AP MLD, the second identification information includes the first TSF parameter information, or an offset between the first TSF parameter information and second TSF parameter information, wherein the second TSF parameter information is TSF parameter information of the second AP or the second AP MLD to which the second AP affiliates.

Optional implementations of step 303 can be found in the optional implementations of step 203 in FIG. 2 and other related parts of the embodiments involved in FIG. 2, which will not be repeated here.

In step 304, sending, by the first communication device 101, the first frame to the second communication device 102.

Optional implementations of step 304 can be found in the optional implementations of step 204 in FIG. 2 and other related parts of the embodiments involved in FIG. 2, which will not be repeated here.

In step 305, determining, by the first communication device 101, a second frame, wherein the second frame includes third identification information, and the third identification information includes a starting sequence number of a data frame sent, after the BA feedback mechanism is established, from an initiator for establishing the BA feedback mechanism to a responder for establishing the BA feedback mechanism.

In some embodiments, the second frame is a BA request frame.

Optional implementations of step 305 can be found in the optional implementations of step 205 in FIG. 2 and other related parts of the embodiments involved in FIG. 2, which will not be repeated here.

In step 306, sending, by the first communication device 101, the second frame to the second communication device 102.

Optional implementations of step 306 can be found in the optional implementations of step 206 in FIG. 2 and other related parts in the embodiments involved in FIG. 2, which will not be repeated here.

The method for negotiating a BA feedback mechanism involved in the embodiments of the present disclosure can include at least one of the steps or embodiments described above. For example, step 301 can be implemented as an independent embodiment, step 303 can be implemented as an independent embodiment, and step 305 can be implemented as an independent embodiment. The combination of step 301 and step 302 can be implemented as an independent embodiment, the combination of step 303 and step 304 can be implemented as an independent embodiment, the combination of step 305 and step 306 can be implemented as an independent embodiment, the combination of step 301, step 302, step 303, and step 304 can be implemented as an independent embodiment, the combination of step 301, step 302, step 305, and step 306 can be implemented as an independent embodiment, and the combination of step 303, step 304, step 305, and step 306 can be implemented as an independent embodiment, but is not limited to this.

In some embodiments, reference can be made to other embodiments described before or after the specification corresponding to FIG. 3.

FIG. 4 is a second schematic flowchart of a method for negotiating a BA feedback mechanism according to embodiments of the present disclosure.

As shown in FIG. 4, the method can be performed by a second communication device 102, which is the responder for establishing the BA feedback mechanism. The method includes following steps.

In step 401, receiving, by the second communication device 102, a third frame sent by the first communication device 101, wherein the third frame includes fourth identification information, and the fourth identification information indicates whether the BA feedback mechanism is applied across the multiple physical APs / AP MLDs.

In some embodiments of the present disclosure, if the first communication device 101 is an STA or a non-AP MLD , the third frame includes one or more of the following: a Probe Request frame, an Association Request frame, or a Reassociation Request frame; if the first communication device 101 is a first AP or a first AP MLD to which the first AP affiliates, the third frame includes one or more of the following: a Beacon frame, a Probe Response frame, an Association Request frame, or a Reassociation Request frame.

In some embodiments of the present disclosure, the fourth identification information includes a first identification field configured to indicate whether the BA feedback mechanism is applied across the multiple physical APs / AP MLDs described above; or a second identification field configured to indicate whether the parameter information for establishing an initial association between the STA and the first AP described above includes the identification information of the second AP or the second AP MLD to which the second AP affiliates.

In some embodiments of the present disclosure, the first identification field is included in an Ultra High Reliability (UHR) capability information element of the third frame.

Optional implementations of step 401 can be found in the optional implementations of steps 201 and 202 in FIG. 2, the optional implementations of steps 301 and 302 in FIG. 3, and other related parts in the embodiments involved in FIG. 2 and FIG. 3, which will not be repeated here.

In step 402, receiving, by the second communication device 102, a first frame, wherein the first frame includes first identification information, the first identification information indicates timeout information of a BA frame, and the timeout information indicates timeout information for a BA feedback mechanism to be applied across multiple physical APs / AP MLDs.

In some embodiments, the first frame is an Add BA request frame.

In some embodiments, the first identification information can be included in a Block ACK timeout field of the first frame.

In some embodiments, the first frame can further include second identification information, and the second identification information includes a time synchronization parameter between the first AP and the second AP after the STA switches from the first AP to the second AP.

In some embodiments, if the first communication device is the STA or the non-AP MLD to which the STA affiliates, the second identification information includes first TSF parameter information of the first AP or the first AP MLD to which the first AP affiliates; if the first communication device is the first AP or the first AP MLD, the second identification information includes the first TSF parameter information, or an offset between the first TSF parameter information and second TSF parameter information, wherein the second TSF parameter information is TSF parameter information of the second AP or the second AP MLD to which the second AP affiliates.

Optional implementations of step 402 can be found in the optional implementations of steps 203 and 204 in FIG. 2, the optional implementations of steps 303 and 304 in FIG. 3, and other related parts in the embodiments involved in FIG. 2 and FIG. 3, which will not be repeated here.

In step 403, receiving, by the second communication device 102, a second frame, wherein the second frame includes third identification information, and the third identification information includes a starting sequence number of a data frame sent, after the BA feedback mechanism is established, from an initiator for establishing the BA feedback mechanism to a responder for establishing the BA feedback mechanism.

In some embodiments, the second frame is a BA request frame.

Optional implementations of step 403 can be found in the optional implementations of steps 205 and 206 in FIG. 2, the optional implementations of steps 305 and 306 in FIG. 3, and other related parts in the embodiments involved in FIG. 2 and FIG. 3, which will not be repeated here.

The method for negotiating a BA feedback mechanism involved in the embodiments of the present disclosure can include at least one of the steps or embodiments described above. For example, step 401, step 402, and step 403 can be implemented as an independent embodiment. The combination of step 401 and step 402 can be implemented as an independent embodiment, the combination of step 401 and step 403 can be implemented as an independent embodiment, and the combination of step 402 and step 403 can be implemented as an independent embodiment, but is not limited to this.

In some embodiments, reference can be made to other embodiments described before or after the specification corresponding to FIG. 4.

Embodiments of the present disclosure also provide an apparatus for implementing any of the above methods for negotiating a BA feedback mechanism. For example, an apparatus for negotiating a BA feedback mechanism is provided, which includes units or modules for implementing the steps performed by the terminal in any of the above methods. Embodiments of the present disclosure also provide another apparatus, which includes units or modules for implementing the steps performed by the network device (e.g., the access network device, the core network functional node, the core network device, etc.) in any of the above methods.

It should be understood that the division of the units in the above device is only a logical functional division. In actual implementations, they can be fully or partially integrated into a single physical entity, or they can be physically separated. In addition, the units in the device can be implemented by a processor calling software. For example, the device includes a processor connected to a memory containing computer instructions. The processor calls the computer instructions stored in the memory to implement any of the above methods or to implement the functions of the units in the above device. The processor can be, for example, a general-purpose processor, such as a central processing unit (CPU) or a microprocessor, and the memory can be internal or external to the device. Alternatively, the units in the device can be implemented as hardware circuits. The functions of some or all units can be achieved through the design of these hardware circuits, which can be understood as one or more processors. For example, in one implementation, the hardware circuit is an application-specific integrated circuit (ASIC). The functions of some or all of the units are achieved through the design of the logical relationships between the components within the circuit. In another implementation, the hardware circuit can be implemented using a programmable logic device (PLD). Taking a Field Programmable Gate Array (FPGA) as an example, it can include a large number of logic gates. The connection relationships between the logic gates are configured through a configuration file, thereby achieving the functions of some or all of the units. All units of the above device can be implemented entirely through processor-called software, entirely through hardware circuits, or partially through processor-called software with the remaining parts implemented through hardware circuits.

In the present disclosure, the processor is a circuit with signal processing capabilities. In one implementation, the processor can be a circuit with instruction read and execute capabilities, such as a central processing unit (CPU), microprocessor, graphics processing unit (GPU) (which can be understood as a type of microprocessor), or digital signal processor (DSP). In another implementation, the processor can implement certain functions through the logical relationships of hardware circuits. These logical relationships are fixed or reconfigurable. For example, the processor is a hardware circuit implemented using an application-specific integrated circuit (ASIC) or a programmable logic device (PLD), such as an FPGA. In a reconfigurable hardware circuit, the process of the processor loading a configuration document and configuring the hardware circuit can be understood as the processor loading instructions to implement the functions of some or all of the above units. In addition, it can also be a hardware circuit designed for artificial intelligence, which can be understood as an ASIC, such as a neural network processing unit (NPU), tensor processing unit (TPU), or deep learning processing unit (DPU).

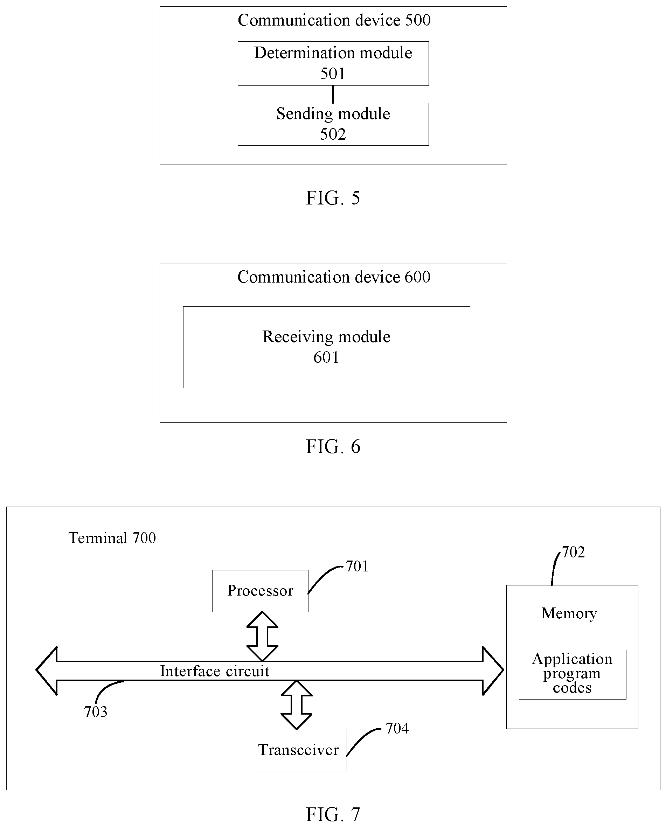

FIG. 5 is a first schematic diagram of a structure of a communication device according to embodiments of the present disclosure. As shown in FIG. 5, the communication device 500 is a first communication device and can be an initiator for establishing a BA feedback mechanism. The communication device 500 includes at least one of a determination module 501 or a sending module 502.

In some embodiments, the determination module 501 is configured to determine a first frame, wherein the first frame includes first identification information, the first identification information indicates timeout information of a Block Acknowledgment (BA) frame, and the timeout information indicates timeout information for a BA feedback mechanism to be applied across multiple physical Access Points (APs).

In some embodiments, the determination module 501 is configured to execute at least one of the communication steps (e.g., steps 201, 203, 205, 301, 303, and 305, but not limited to this) executed by the first communication device 101 in any of the above methods, which will not be elaborated here. The sending module 502 is configured to execute steps 202, 204, 206, 302, 304, and 306.

FIG. 6 is a second schematic diagram of a structure of a communication device according to embodiments of the present disclosure. As shown in FIG. 6, the communication device 700 is a second communication device, which can be a responder for establishing a BA feedback mechanism. The communication device can include a receiving module 601.

In some embodiments, the receiving module 601 is configured to receive a first frame, wherein the first frame includes first identification information, the first identification information indicates timeout information of a Block Acknowledgment (BA) frame, and the timeout information indicates timeout information for a BA feedback mechanism to be applied across multiple physical Access Points (APs).

In some embodiments, the receiving module 601 is configured to execute at least one of the communication steps (e.g., steps 202, 204, 206, 302, 304, 306, 401, 402, and 403) executed by the second communication device 102 in any of the above methods, which will not be elaborated here.

In some embodiments, the transceiver module can include a sending module and/or a receiving module. The sending module and the receiving module can be separate or integrated module. In some embodiments, the transceiver module can be interchangeable with a transceiver.

FIG. 7 is a schematic diagram of a structure of a terminal 700 (e.g., a user equipment) according to embodiments of the present disclosure. The terminal 700 can be a chip, a chip system, or a processor that supports the network device in implementing any of the above methods, or a chip, a chip system, or a processor that supports the terminal in implementing any of the above methods. The terminal 700 can be configured to implement the methods described in the above method embodiments, and specific details can be found in the descriptions in the above method embodiments.

As shown in FIG. 7, the terminal 700 includes one or more processors 701. The processor 701 can be a general-purpose processor or an application-specific processor, such as a baseband processor or a central processing unit (CPU). The baseband processor can be used to process communication protocols and communication data, while the CPU can be used to control the communication device (e.g., base station, baseband chip, terminal device, terminal device chip, DU or CU, etc.), execute programs, and process program data. The terminal 800 is configured to perform any of the above methods.

In some embodiments, the terminal 700 further includes one or more memories 702 for storing instructions. In some embodiments, all or part of the memories 802 can be located outside the terminal 700.

In some embodiments, the terminal 700 further includes one or more transceivers 704. When the terminal 700 includes one or more transceivers 704, at least one of the communication steps such as transmitting and receiving in the above methods (e.g., steps 202, 204, 206, 302, 304, 306, 401, 402, and 403, but not limited to this) are performed by the transceiver 704, and at least one of other steps (e.g., steps 201, 203, 205, 301, 303, and 305, but not limited to this) is performed by the processor 701.

In some embodiments, the transceiver can include a receiver and a transmitter, which can be separated or integrated. In some embodiments, terms such as "transceiver", "transceiver unit", "transceiver machine", "transceiver circuit", etc., can be used interchangeably. Terms such as "transmitter", "transmitting unit", "transmitting machine", "transmitting circuit", etc., can be used interchangeably. Terms such as "receiver", "receiving unit", "receiving machine", "receiving circuit", etc., can be used interchangeably.

In some embodiments, the terminal 700 can include one or more interface circuits 703. The interface circuit 703 is connected to the memory 702 and can be used to receive signals from the memory 702 or other devices, and to send signals to the memory 702 or other devices. For example, the interface circuit 703 can read instructions stored in the memory 702 and send the instructions to the processor 701.

The terminal 700 described in the above embodiments can be a communication device such as a user equipment, but the scope of the terminal 700 described in the present disclosure is not limited to this, and the structure of the terminal 700 is not limited to FIG. 7. The communication device can be a standalone device or part of a large device. For example, the communication device can be: (1) a standalone integrated circuit (IC), a chip, a chip system, or a subsystem; (2) a collection of one or more ICs, optionally, including storage components for storing data and programs; (3) an ASIC, such as a modem; (4) a module that can be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc., and (6) other devices, etc.

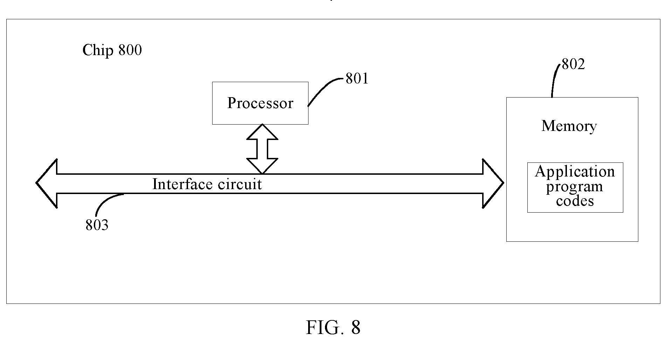

FIG. 8 is a schematic diagram of a structure of a chip 800 according to embodiments of the present disclosure. For cases where the terminal 700 can be a chip or a chip system, the reference can be made to the schematic diagram of the structure of the chip 800 shown in FIG. 8, but it is not limited to this.

The chip 800 includes one or more processors 801, which are configured to perform any of the above methods.

In some embodiments, the chip 800 further includes one or more interface circuits 803. The interface circuits 803 are connected to the memory 802. The interface circuit 803 can be configured to receive signals from the memory 802 or other devices, and configured to send signals to the memory 802 or other devices. For example, the interface circuit 803 can read instructions stored in the memory 802 and send those instructions to the processor 801.

In some embodiments, the interface circuit 803 executes at least one of the communication steps (e.g., steps 202, 204, 206, 302, 304, 306, 401, 402, and 403, etc., but not limited to this) in the methods described above, and the processor 801 executes at least one of other steps (e.g., steps 201, 203, 205, 301, 303, and 305, but not limited to this).

In some embodiments, the terms "interface circuit", "interface", "transceiver pin", and "transceiver", etc., can be used interchangeably.

In some embodiments, the chip 800 further includes one or more memories 802 for storing instructions. In some embodiments, all or part of the memories 802 can be located outside the chip 800.

The present disclosure also provides a storage medium storing instructions that, when executed on the terminal 700, cause the terminal 700 to perform any of the above methods. In some embodiments, the storage medium is an electronic storage medium. In some embodiments, the storage medium is a computer-readable storage medium, but is not limited to this, and the storage medium can also be a storage medium readable by other devices. In some embodiments, the storage medium can be a non-transitory storage medium, but is not limited to this, and the storage medium can also be a transitory storage medium.

The present disclosure also provides a program product that, when executed by the terminal 700, causes the terminal 700 to perform any of the above methods. In some embodiments, the program product is a computer program product.

The present disclosure also provides a computer program that, when executed on a computer, causes the computer to perform any of the above methods.

## Claims

1. A method for negotiating a Block Acknowledgment (BA) feedback mechanism, performed by an initiator for establishing the BA feedback mechanism, the method comprising:
determining a first frame, wherein the first frame comprises first identification information, the first identification information indicates timeout information of a BA frame, and the timeout information indicates timeout information for the BA feedback mechanism to be applied across multiple physical Access Points (APs) / Access Point Multi-Link Devices (AP MLDs); and
sending the first frame.

2. The method for negotiating a BA feedback mechanism according to claim 1, wherein the first identification information is comprised in a block acknowledgment (Block ACK) timeout field of the first frame.

3. The method for negotiating a BA feedback mechanism according to claim 1 or 2, wherein the first frame further comprises second identification information, and the second identification information comprises a time synchronization parameter between a first AP and a second AP after a station (STA) switches from the first AP to the second AP.

4. The method for negotiating a BA feedback mechanism according to claim 3, wherein
the initiator is the STA or a non-Access Point Multi-Link Device (non-AP MLD) to which the STA affiliates, and the second identification information comprises first time synchronization function (TSF) parameter information of the first AP or a first AP MLD to which the first AP affiliates; or
the initiator is the first AP or the first AP MLD, and the second identification information comprises the first TSF parameter information, or an offset between the first TSF parameter information and second TSF parameter information;
the second TSF parameter information is TSF parameter information of the second AP or a second AP MLD to which the second AP affiliates.

5. The method for negotiating a BA feedback mechanism according to claim 3 or 4, further comprising:
determining a second frame, wherein the second frame comprises third identification information, and the third identification information comprises a starting sequence number of a data frame sent, after the BA feedback mechanism is established, from the initiator to a responder for establishing the BA feedback mechanism; and
sending the second frame.

6. The method for negotiating a BA feedback mechanism according to claim 5, further comprising:
determining a third frame, wherein the third frame comprises fourth identification information, and the fourth identification information indicates whether the BA feedback mechanism is applied across the multiple physical APs / AP MLDs; and
sending the third frame.

7. The method for negotiating a BA feedback mechanism according to claim 6, wherein the fourth identification information comprises:
a first identification field configured to indicate whether the BA feedback mechanism is applied across the multiple physical APs / AP MLDs; or
a second identification field configured to indicate whether parameter information for establishing an initial association between the STA and the first AP comprises identification information of the second AP or a second AP MLD.

8. The method for negotiating a BA feedback mechanism according to claim 7, wherein the first identification field is comprised in an Ultra High Reliability (UHR) capability information element of the third frame.

9. The method for negotiating a BA feedback mechanism according to any of claims 6 to 8,
wherein the first frame is an Add Block Acknowledgment request (Add BA request) frame, and the second frame is a Block Acknowledgment request (BA request) frame;
wherein the initiator is the STA or a non-AP MLD, and the third frame comprises one or more of a Probe Request frame, an Association Request frame, or a Reassociation Request frame; and
wherein the initiator is the first AP or a first AP MLD, and the third frame comprises one or more of a Beacon frame, a Probe Response frame, the Association Request frame, or the Reassociation Request frame.

10. A method for negotiating a Block Acknowledgment (BA) feedback mechanism, performed by a responder for establishing the BA feedback mechanism, the method comprising:
receiving a first frame, wherein the first frame comprises first identification information, the first identification information indicates timeout information of a BA frame, and the timeout information indicates timeout information for the BA feedback mechanism to be applied across multiple physical Access Points (APs) / Access Point Multi-Link Devices (AP MLDs).

11. The method for negotiating a BA feedback mechanism according to claim 10, wherein the first identification information is comprised in a block acknowledgment (Block ACK) timeout field of the first frame.

12. The method for negotiating a BA feedback mechanism according to claim 10 or 11, wherein the first frame further comprises second identification information, and the second identification information comprises a time synchronization parameter between a first AP and a second AP after a station (STA) switches from the first AP to the second AP.

13. The method for negotiating a BA feedback mechanism according to claim 12, wherein:
the initiator for establishing the BA feedback mechanism is the STA or a non-Access Point Multi-Link Device (non-AP MLD) to which the STA affiliates, and the second identification information comprises first time synchronization function (TSF) parameter information of the first AP or a first AP MLD to which the first AP affiliates; or
the initiator for establishing the BA feedback mechanism is the first AP or the first AP MLD, and the second identification information comprises the first TSF parameter information, or an offset between the first TSF parameter information and second TSF parameter information;
the second TSF parameter information is TSF parameter information of the second AP or a second AP MLD to which the second AP affiliates.

14. The method for negotiating a BA feedback mechanism according to claim 12 or 13, further comprising:
receiving a second frame, wherein the second frame comprises third identification information, and the third identification information comprises a starting sequence number of a data frame sent, after the BA feedback mechanism is established, from the initiator to a responder for establishing the BA feedback mechanism.

15. The method for negotiating a BA feedback mechanism according to claim 14, further comprising:
receiving a third frame, wherein the third frame comprises fourth identification information, and the fourth identification information indicates whether the BA feedback mechanism is applied across the multiple physical APs / AP MLDs.

16. The method for negotiating a BA feedback mechanism according to claim 15, wherein the fourth identification information comprises:
a first identification field configured to indicate whether the BA feedback mechanism is applied across the multiple physical APs / AP MLDs; or
a second identification field configured to indicate whether parameter information for establishing an initial association between the STA and the first AP comprises identification information of the second AP or a second AP MLD.

17. The method for negotiating a BA feedback mechanism according to claim 16, wherein the first identification field is comprised in an Ultra High Reliability (UHR) capability information element of the third frame.

18. The method for negotiating a BA feedback mechanism according to any of claims 15 to 17,
wherein the first frame is an Add Block Acknowledgment request (Add BA request) frame, and the second frame is a Block Acknowledgment request (BA request) frame;
wherein the initiator is the STA or a non-AP MLD, and the third frame comprises one or more of a Probe Request frame, an Association Request frame, or a Reassociation Request frame; and
wherein the initiator is the first AP or a first AP MLD, and the third frame comprises one or more of a Beacon frame, a Probe Response frame, the Association Request frame, or the Reassociation Request frame.

19. A communication device, wherein the communication device is an initiator for establishing a Block Acknowledgment (BA) feedback mechanism, and comprises:
a determination module configured to determine a first frame, wherein the first frame comprises first identification information, the first identification information indicates timeout information of a BA frame, and the timeout information indicates timeout information for the BA feedback mechanism to be applied across multiple physical Access Points (APs) / Access Point Multi-Link Devices (AP MLDs); and
a sending module configured to send the first frame.

20. A communication device, wherein the communication device is a responder for establishing a BA feedback mechanism, and comprises:
a receiving module configured to receive a first frame, wherein the first frame comprises first identification information, the first identification information indicates timeout information of a BA frame, and the timeout information indicates timeout information for the BA feedback mechanism to be applied across multiple physical APs / AP MLDs.

21. A communication device, wherein the communication device is an initiator for establishing a BA feedback mechanism, and comprises:
one or more processors; and
a memory coupled to the one or more processors, wherein the memory stores executable instructions, which when executed by the one or more processors, cause the communication device to perform the method for negotiating the BA feedback mechanism according to any of claims 1 to 9.

22. A communication device, wherein the communication device is a responder for establishing a BA feedback mechanism, and comprises:
one or more processors; and
a memory coupled to the one or more processors, wherein the memory stores executable instructions, which when executed by the one or more processors, cause the communication device to perform the method for negotiating the BA feedback mechanism according to any of claims 10 to 18.

23. A communication system, comprising a first communication device and a second communication device, wherein the first communication device is an initiator for establishing a Block Acknowledgment (BA) feedback mechanism, and the second communication device is a responder of establishing the BA feedback mechanism, and wherein the first communication device is configured to perform the method for negotiating the BA feedback mechanism according to any of claims 1 to 9, and the second communication device is configured to perform the method for negotiating the BA feedback mechanism according to any of claims 10 to 18.

24. A storage medium having instructions stored thereon, wherein when the instructions are executed on a communication device, the communication device is caused to perform the method for negotiating the Block Acknowledgment (BA) feedback mechanism according to any of claims 1 to 9, or perform the method for negotiating the BA feedback mechanism according to any of claims 10 to 18.
